# EUROPEAN PATENT SPECIFICATION

(11) **EP 3 907 053 B1**
(45) Date of publication and mention of the grant of the patent: **02.08.2023**
(21) Application number: 21170746.8
(22) Date of filing: 27.04.2021
(51) Int. Cl.: G06N 3/08, B27M 1/08, G01N 33/46, G05B 19/18, G06N 20/00, G06N 3/045

(54) **METHOD FOR OPTIMIZING THE MOVEMENT OF A MACHINE FOR WORKING PANELS AND SYSTEM THEREOF**
VERFAHREN ZUM OPTIMALISIEREN DES BEWEGUNGSABLAUFS EINER MASCHINE FÜR ARBEITSBRETTER UND DAFÜR ZUGEHÖRIGES SYSTEM
PROCÉDÉ D'OPTIMISATION DE MOUVEMENT DE DISPOSITIF DE PANNEAUX DE TRAVAIL ET SYSTEM ASSOCIÉ

(30) Priority: 06.05.2020 IT 202000010030
(43) Date of publication of application: 10.11.2021
(73) Proprietor: SCM Group S.p.A., 47921 Rimini (RN) (IT)
(72) Inventor: CALMO, Giuseppe, 47921 Rimini (IT); BILLI, Denis, 47921 Rimini (IT)
(74) Representative: Tiburzi, Andrea

(56) References cited:
- DE-A1-102016 000 100
- US-A1- 2019 018 392

## Description

The present invention relates to a method for optimizing the movement of a machine for working panels and improved system thereof.

### Field of the invention

More specifically, the invention relates to a method and a system of the above type, studied and implemented, in particular, to optimize in real-time the trajectory of a machine, such as a robot, or of a tool installed on such machine or robot, for the machining of panels made of wood, plastic, fiberglass, but which can be used for any application in which it is necessary to optimize the movement of a machine or tool.

In the following, the description will be directed to the movement of numerically controlled machine tools but it is clear that the same should not be considered limited to this specific use.

### Prior art

Currently, in the machining of panels and the like, numerically controlled machine tools or working centers are known, which are capable of performing a large number of operations on the panels such as, for example, milling, drilling, edging, rounding.

As is known, this is made possible, among other things, due to the availability of a large number of tools within a tool magazine.

Therefore, according to the type of required machining, each machine uses suitable machining tools for the panel machining.

Each type of machining requires the respective execution by the machine of a set of operations or steps in order to complete such specific machining.

In particular, each machine carries out a specific working program relating to the use of a respective machining tool.

Each working program is associated with a respective movement program, which includes a series of sequential operations that the machine must perform on the workpiece so that the respective machining associated with this working program is completed, and then move on to the next processing.

However, the prolonged use of these numerically controlled machine tools inevitably involves wear of the mechanical components used during the various machining, as well as high consumption of electrical energy to carry out the various machining.

Among other things, as a result of the wear of the mechanical components of the working plant, the trajectories of the tools and of the moving mechanical parts may have deviations, thereby inevitably implying inaccuracies in the final machining.

Therefore, on the one hand, the consumption reduction need is felt, whether related to mechanical components or energy of the machines, on the other hand, however, it is felt the need to maintain high precision and quality in the machining of panels.

Furthermore, as is well known, there are systems capable of optimizing the movement of the machines, such as, for example, numerically controlled machines.

In fact, these known systems allow intervening on the movement programs foreseen for each machine, updating them according to the different needs, such as, for example, the energy consumption reduction.

However, one of the main drawbacks of these known solutions is given by the fact that they have been developed for the machine operation in factory conditions, i.e., in ideal conditions.

In fact, such movement programs are previously generated by suitable logic control units on the basis of the appropriate machining programs that the machine has to perform.

Therefore, such movement programs may lose their effectiveness and be not optimal for machines in operation, which have been subject to wear, even partial, or which in any case have no longer the same factory conditions.

Furthermore, such moving programs can lead to early wear of some components, which had been identified as preferred in the preliminary optimization phase. US2019/018392A1 discloses the preamble of claim 1.

A further drawback of such known solutions is that they do not allow optimizing in real-time the movement of the machines, and therefore of the tools installed on such machines since they are not considered factors such as, for example, the structural conditions of the machine, the repetitiveness of certain mechanical operations, or the use time of a certain machining tool.

### Scope of the invention

In the light of the above, it is, therefore, a scope of the present invention overcoming the limits of the prior art set out above, by providing a method and a system for optimizing the movement of a panel machining machine that is capable of independently optimizing the operation of the machines, as far as possible, from their maintenance conditions.

Another scope of the invention is to provide a method and a system for optimizing the movement of a machine for working panels, which allows reducing the wear of the mechanical components, and the electrical consumption of the machine.

Another scope of the invention is to provide a method and a system for optimizing the movement of a machine for working panels, which is highly reliable, relatively simple to manufacture, and which has competitive costs if compared to the prior art.

Finally, the scope of the present invention is to provide the tools necessary for carrying out the optimization method and the apparatuses that carry out this optimization method.

### Object of the invention

It is therefore object of the present invention a method for optimizing the movement of a machine for working wooden panels, that can be executed by means of a control unit, wherein said machine comprises:
working members for carrying out a working program on the basis of instructions,
actuating means, connected to said working members, for actuating the operation on the basis of said instructions,
one or more detecting sensors, for detecting data based on predetermined status parameters of said working members and/or of said actuating means of said machine, and
wherein said method comprises the following steps, executed by means of said control unit connected to said actuating means and to said detecting sensors of said machine:
   A. receiving from said detecting sensors said data, so as to detect the state of use of said working members;
   B. receiving and reading said working program of said machine;
   C. optimizing said working program according to said data, so as to obtain a modified working program, obtaining a sequence of movement instructions of said actuating means, according to the use of said working members;
   D. updating the instructions of said working program with said modified working program; and
   E. having said modified working program carried out by said machine by means of said actuating means.

According to the invention, said optimization step C is executed on the basis of an objective function or constraints. Said objective function or said constraints are selected from one or more of the following:
- maximising the equal distribution of energy consumption between said working members;
- minimising the operations of the working members, which have a number of working hours carried out above a percentage threshold of maximum working hours; and/or
- minimising the dispersion of the operating hours of one or more groups of actuating means.

Further according to the invention, said step C may comprise the following sub-steps:
C1. executing an algorithm based on a supervised or semi-supervised first neural network, wherein said first neural network receives in input said data from said detecting sensors and is configured for realizing a predictive model of the behavior of said machine from said data; and
C2. executing an algorithm based on an unsupervised second neural network, connected so as to receive inlet said predictive model of said first neural network and said data.

In particular, according to the invention, said second neural network may be configured for calculating said instructions (I) of said optimized working program on the basis of:
said objective function or said constraints;
said predictive model of said first neural network; and
said input data from said one or more detecting sensors.

In addition, according to the invention, said first neural network comprises an algorithm of the "clustering" semi-supervised type, while, according to the invention, said second neural network may comprise an algorithm of the "Deep Reinforcement Learning" type.

Further, according to the invention, said data received in said step A may comprise: the energy consumption of each of said working members and of the machine as a whole; the working hours carried out by each of said working members; and/or the historical data detected by said sensors means; and/or said step C may comprise the following sub-step:
C3. optimizing said working program according to said data considering: technical constraints to be observed for said actuating members and/or said working members; minimum and maximum values of the energy consumption of each of said working members and of the machine as a whole; values of the working hours carried out by each of said working members; the maximum number of working hours that can be carried out by each working member; and/or the current instructions of said working program.

Further, during said step D said control unit may provide corrective factors for modifying said instructions of said working program.

Always according to the invention, said method may comprise, before said step E, the step of simulating said improved working program by means of a simulation module and verifying possible collisions during the execution of said improved working program of said machine.

It is also object of the present invention an improved working system, in particular for working wooden panels, on the basis of a working program comprising instructions, wherein said system comprises:
a machine for working wooden panels, comprising working members for carrying out a working program,
   actuating means, connected to said working means, so as to actuate its operation, and
   one or more detecting sensors, for detecting data based on predetermined status parameters of said working members and/or of said actuating means of said machine; and
at least one control unit connected to said actuating means of said machine and to said detecting sensors, wherein said at least one control unit comprises a processing module for processing the instructions for the control of the movement of said actuating means of said machine, obtained on the basis of said working program;
said system being characterized in that said at least one control unit further comprises:
   an improvement module, configured for
   receiving inlet said data from said one or more detecting sensors,
   processing said data by the method by the method according the present invention, so as to obtain a sequence of movement instructions of said actuating means, according to the use of said working members,
   sending said modified working program to said processing module, so as to modify said instructions of said working program.

In particular, according to the invention, said improvement module may comprise:
a supervised or a semi-supervised first neural network, which receives inlet said data from said detecting sensors, wherein said first neural network is configured for building a predictive model of the behaviour of said machine from said data, and
an unsupervised second neural network, connected so as to receive in input said predictive model of said first neural network and said data from said one or more detecting sensors of said machine.

Said second neural network may be configured to obtain a modified working program from said predictive model for modifying said instructions of said working program.

Always according to the invention, said data may comprise the energy consumption of each of said working members and of the machine as a whole, the working hours carried out by each of said working members, and/or the historical data detected by said sensors means.

Also, said improvement module may be configured for receiving or determining the maximum number of working hours of each working member.

Further, said improvement module improves said working program according to said data considering: technical constraints to be observed for said actuating means and/or said working members; minimum and maximum values of the energy consumption of each of said working members and of the machine as a whole, values of the working hours carried out by each of said working members; the maximum number of working hours that can be carried out by each working member; and/or the current instructions of said working program.

Said improvement module may be configured for providing corrective factors for modifying said instructions of said working program.

Finally, according to the invention, said control unit may comprise a simulation module, connected to said improvement module, wherein said simulation module may be configured for receiving said improved working program from said improvement module;
simulating said improved working program; and verifying possible collisions during the execution of said improved working program of said machine.

### Brief description of the figures

The present invention will be now described, for illustrative but not limitative purposes, according to its preferred embodiments, with particular reference to the figures of the enclosed drawings, wherein:
figure 1 shows a first functional block diagram of an embodiment of a system for optimizing the movement of a machine for working wooden panels, according to the present invention;
figure 2 shows a second functional block diagram of an embodiment of a system for optimizing the movement of a machine for working wooden panels, according to the present invention, in which there is or not a simulation module;
figure 3 shows a first flowchart relating to the operations performed by a first neural network of the system of figure 1 ; and
figure 4 shows a second flowchart relating to the operations performed by a second neural network of the system of figure 1.

In the various figures, similar parts will be indicated by the same reference numbers.

### Detailed description

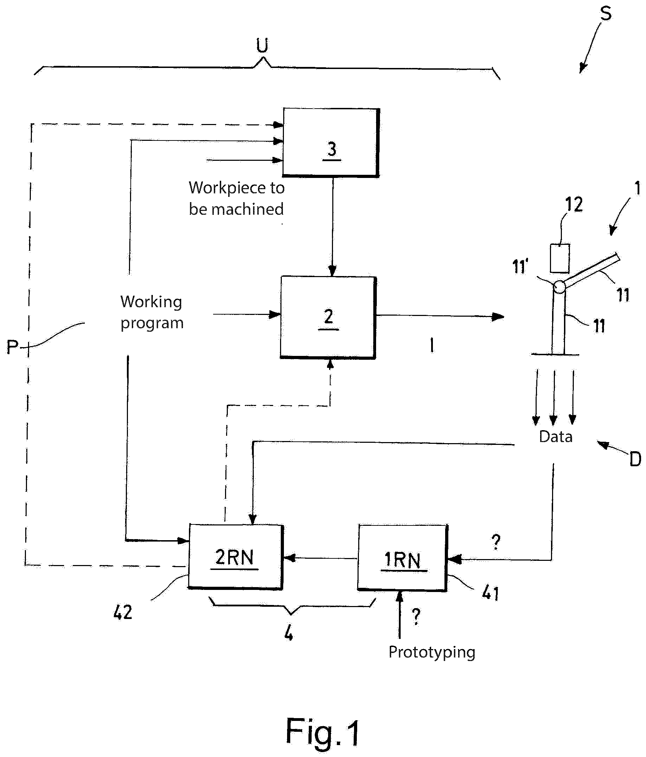

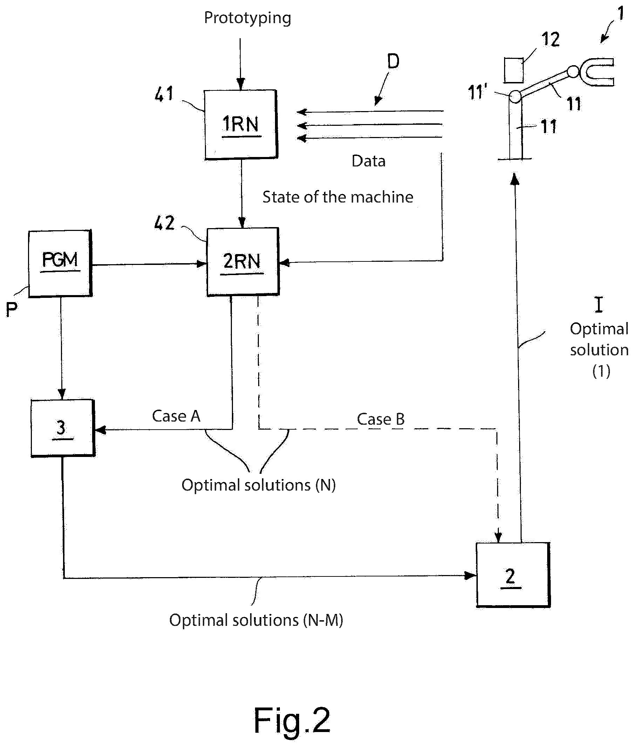

With reference to figure 1 or 2, an optimization system can be observed, indicated as a whole with S, intended for handling and managing of a machine 1 for working, in particular, wooden panels.

The system S mainly comprises a machine 1, intended for working panels made of wood, or plastic, fiberglass, aluminum and metals in general, and a control unit U, for the control of said machine 1.

Said machine 1 comprises working members 11, generally of mechanical type, which must be moved sequentially to perform the machining on the panels (not shown in the figures).

Said machine 1 can be of various types, such as gantry machining centers, having a work plane and a work bridge with equipped units, or robots/anthropomorphic arms or hybrid systems of those described.

The machine 1 is numerically controlled and capable of carrying out operations on the wooden panels, such as, for example, milling, drilling, edging or rounding, on the basis of a working program P supplied according to the machining needs to be performed. Said working program has also constraints relating to the operation of the machine 1.

The working program P provides machining sequences to be carried out by the machine 1 and determining the position in the space of the various parts.

Therefore, in order to carry out the operations, the machine 1 requires a series of sequential instructions, organized or that can be organized in vectors, aimed at determining the movement of each actuating means of the machine 1, so as to move it according to a suitable sequence and obtain the desired machining.

Said machine 1 generally comprises actuating means 11', to control the movement of the various working members.

The machining steps of said machine 1 can be carried out through the activation and the control sequence of said actuators.

The machine 1 also comprises detecting sensors 12, for detecting data D based on predetermined status parameters of said machine 1, of said working members 11 or of said actuating means 11'. In particular, said data D are detected to monitor or estimate the wear of some parts or members of the machine 1, and can include the energy consumption of each of said working members 11 and of the machine 1 as a whole, and/or the work hours carried out by each of said working members 11.

By way of example, such sensors 12 can be adapted to measure at least one or more of the following data D:
- the power absorption of the motors, in order to have an indirect measure of electrical consumption;
- the mechanical wear of the moving parts, for example through vibrometric measurements, since, as the wear of the various components increases, their behavior and the vibrations emitted change;
- the accelerations of the moving parts, for example by accelerometers, to detect the correct sliding of the various components, and
- the number of specific movements carried out by a working member 11.

However, in general, the positioning of the sensors 12 within the machine 1 and the type of the same, may vary according to the type of machine 1 to be used. In addition, it is possible to save a history of the data (D) detected.

Said sensors 12 can of course be of various types, that is, without limitation, temperature, and pressure sensors, for measuring the operating pressure of pneumatic actuators, encoder counters, optical detectors, and the like.

The control unit U is connected to said detecting sensors 12 and to said actuating means 11' of said machine 1, to move and control the same.

Said control unit U is in particular configured to control the movement of said machine 1, optimizing in real-time its operation on the basis of an objective function, by driving said actuating means 11' and/or said working members 11.

The objective function is selected from one or more of the following:
- maximizing the equal distribution of energy consumption among said working members 11;
- minimizing the operations of the working members 11, which have a number of working hours performed above a percentage threshold of the maximum working hours.

The control unit U can be a single computer or a server, connected to the machine 1, or it can comprise a plurality of different elements or a network of computers connected to each other, possibly also in the cloud.

The control unit U in the present embodiment comprises a processing module 2, directly connected to the numerically controlled machine 1, for processing and sending the instructions I, for controlling the movement of said machine 1, or of the actuating means 11' of the machine 1.

The processing module 2 is configured to execute a working program P for the movement of said machine 1, suitably processed to perform sequential operations.

The processing module 2 activates the actuating means 11' of the machine 1 by means of instruction sequences I.

Furthermore, the control unit U also comprises a simulation module 3, in particular a 3D simulator. The simulation module 3 is configured to simulate, starting from the working program P, the movement of the machine 1, which must be performed by executing the instructions I of said working program P, and is also configured to return predetermined simulated parameters.

It is considered that the simulation module 3 is used in the prior art to check for possible collisions between parts of the machine 1 and to modify the program P to avoid them. In other words, its function is generally that of executing the working program P in a simulated way and possibly "correct", possibly providing the corrections to be made to the working program P, so that the control unit can modify the instructions I to be sent to machine 1 before the actual execution of the working program P from the same machine 1.

The control unit U further comprises an improvement module 4, connected to said simulation module 3, and to said processing module 2.

Said improvement module 4 is configured to receive the data D relating to the parameters detected by the sensors 12 of the machine 1. In this way, the improvement module 4 is able to detect the real-time status of the machine 1, the status of the various parts of the same, and possibly the parameters which, possibly combined with others, can determine, even in an approximate way, the maintenance state of the wear of the several parts of the machine 1.

The optimization module 4 is also configured to optimize the working program P of said machine 1 starting from said data D and on the basis of an objective function.

In particular, the improvement module 4 can be configured to receive or determine the maximum number of working hours of each working member 11, and can be configured to optimize the movement of said machine 1, by modifying the trajectories of said working program P as a function of said data D taking into account, for example:
- technical constraints to be observed for said working members 11, for said actuating means 11' and/or for said parameters measured by said sensors 12;
- minimum and maximum values of the energy consumption of each of said working members 11 and of the machine 1 as a whole, and of the total working hours of each of said working members;
- the maximum number of hours of work that can be carried out by each working members; and
- the current machining program P.

Starting from the optimized machining program, said improvement module 4 updates the instructions I of said working program P, for example by providing correction factors for said instructions I.

Furthermore, said improvement module 4 updates said simulation module 3, so as to verify the absence of any collisions, and updates said working program P to be executed by said controller 2, in such a way as to optimize the movement of the machine 1 in real-time.

In addition to the input data to the improvement module 4, detected by said sensors 12 of the machine 1, the improvement module also receives the working program P.

In particular, said improvement module comprises a first neural network 41 connected to said machine 1 to receive in input the data D detected by the sensors 12 of the machine 1 itself.

Furthermore, the first neural network 41 is configured to discretize the state of the machine 1, and group the discrete data to be sent to a second neural network 42, as described below.

Said first neural network 41 is of the supervised or semi-supervised type, and in particular it can be a semi-supervised "clustering" type algorithm starting from the data D detected by the sensors 12. In particular, with the term first neural network 41 of the semi-supervised type, it can be understood as a neural network 41, which must initially be trained by an operator, e.g., during the installation step of the machine 1, for example by manually choosing which data to be sent out, starting from the incoming data.

By way of example, such first neural network 41 receives as input a first array of data, which contains the ideal state of the machine, defined by an operator, and a second array of data D, detected by the sensors 12, which shows the response of these sensors 12. The "clustering" type algorithm processes such data and classifies them within specific subgroups inherent to the operation of the machine 1 itself, so as to have information on the status of the machine 1 in real-time. The first neural network 41 can also provide as output a graph, having said first data array on the abscissa and said second data array D on the ordinate, colored according to the assigned classification.

Therefore, in general, the input data to said first neural network 41 may not be time-dependent. In addition, said first neural network 41 can have the input of historical data relating to the operating parameters of the machine 1, and of the relative parts, or production prototypes. In particular, the acquisition of such historical data can take place:
- during the prototyping phase of machine 1;
- during the production phase of the machine 1;
- during the testing phase of the machine 1; and/or
- during the operating phase of the machine 1.

Starting from the data collected in one or more of such phases, it is possible to build a database containing a set of historical data, which can be used for the construction of said first data array, in order to improve the performance of said first neural network 41.

The improvement module 4 further comprises a second neural network 42, which, similarly to said first neural network 41, receives in input the data D detected by said sensors 12 of said machine 1.

Said second neural network 42, of the unsupervised type, is also connected, and receives in input the data processed by said first neural network 41. Furthermore, said second neural network 42 also receives in input the processing program P given as input to the control unit U.

Said second neural network 42 is of the unsupervised type and can optimize a predetermined objective function or, on the basis of the input data and/or constraints of said machine 1, establishes the objective function to be minimized and minimizes it.

In particular, the second neural network 42 can be configured to calculate, on the basis of the input data, a reduced model of the physical behavior of the machine 1.

Furthermore, the second neural network 42 can be configured to choose between a field of possible trajectories, so as to distribute the work over time between the various actuating means 11'.

The output of the second neural network 42 is connected in input to the control unit 2 and/or to the simulation module 3.

By way of example, the second neural network 42 can receive in input data D comprising the position of a panel to be machined of relatively small dimensions, placed on the work surface of the machine 1, and a sub-set of data coming from the first neural network 41, relating to the wear of the working members 11, for example with regard to the number of movements already carried out by the various bearings.

Starting from such data, the second neural network can decide to find a solution that minimizes the wear of the working parts and can create a set of solutions I that foresee the displacement of successive panels to be machined on the work surface.

The operation of the optimization system S can therefore take place as follows.

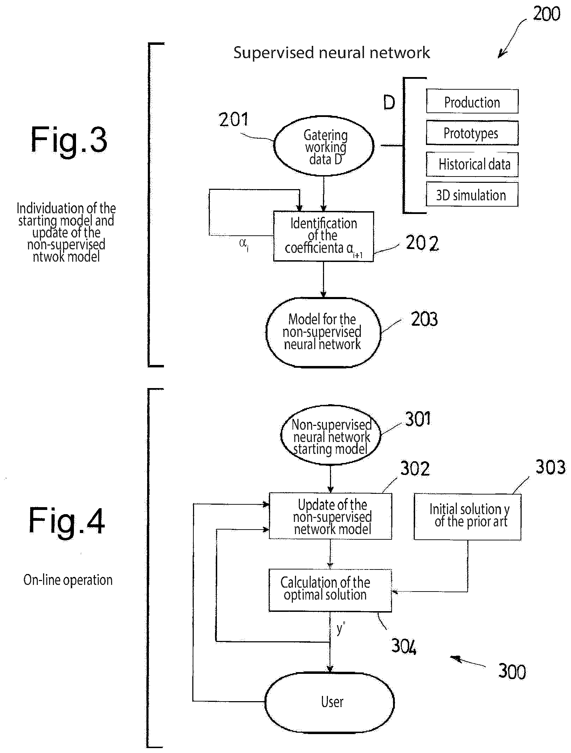

Referring also to figures 3 and 4, two flowcharts are observed, indicated respectively with the numerical references 200 and 300, relating to the identification of the initial model and updating of the unsupervised network model, and the "on-line" operation, namely in real-time.

In particular, with reference to figure 3, starting from the input data D in step 201, the first neural network 41 is configured to build in step 202 a predictive model of the behavior of the machine 1, by identifying a plurality of coefficients *aᵢ*, in which each i-th coefficient can depend on the previously calculated coefficients, for example on the basis of a clustering type algorithm.

The data D reported in input to the first neural network 41 are related to production, prototypes, historical data as well as simulation data coming from the simulation module 3.

In doing so, a model for the unsupervised neural network is obtained in step 203.

Referring now to figure 4, the second unsupervised neural network 42 is configured to receive in step 301 the predictive model output of step 203, built by said first neural network 41, for example by receiving said coefficients *aᵢ*, and updating (step 302) such model, so as to optimize (step 304), as better explained below, the movement and operation of said machine 1 starting from said predictive model of said first neural network 41, sending this optimized model y* to said simulation module 3.

The second neural network 42 can also be configured to receive in input, in step 301, also said data D detected by the sensors 12. Furthermore, said second neural network 42 can also use said data, in which the ideal state of the machine 1 is contained and/or said historical data of the machine 1.

The optimization step 304 of the second neural network 42 can comprise a "Deep Reinforcement Learning" type algorithm, configured in such a way that the optimized model y* allows obtaining machining with precision and energy consumption as close as possible to the ideal static solution of the machine 1 in ISO conditions. In particular, through the use of a "Deep Reinforcement Learning" algorithm, it is possible to strengthen the decision-making system from time to time.

The simulation module 3, in fact, checks whether possible collisions are foreseen during the movement of said machine 1 by means of this optimized model, and, in this case, sends the data back to the first neural network 41, which will update the predictive model and send it to the second neural network 42.

It should be noted that in alternative embodiments, the simulation module 3 can be omitted or present in the form of a system of equations defining the constraints of the physical problem directly within the improvement module 4 and the space of possible solutions.

In fact, with particular reference to figure 3, in a first case A, in which the simulation module 3 is present, the second neural network can send a set of N optimal solutions to said simulation module 3, in which N is an integer greater than or equal to 1. Consequently, the simulation module 3, once such N optimal solutions have been simulated, chooses a sub-group of N-M optimal solutions that are physically realizable to be sent to the processing module 2, in which N-M is an integer greater than or equal to 1 and less than or equal to N.

Alternatively, in a second case B, in which for example the simulation module 3 is absent, the second neural network can send directly to the processing module 2 said N optimal solutions, and the processing module 2 will be able to test a sub-set of such optimal solutions or all the N optimal solutions to the machine 1, until the best physically achievable solution is identified, to be implemented for a predefined number of machining operations.

Therefore, it is clear that the simulation module 3 allows increasing the efficiency of the optimization system S, since it allows validating the solution obtained from said improvement module 4, and in particular from said second neural network 42, as just described. The simulation module 3 also allows reducing the search space and the identification time of the effective optimal solution, which otherwise would have to be tested directly by the machine 1, as just described.

In an initial step, the second neural network 42 optimizes the working program P of said machine 1 starting from an initial solution y₀ of the prior art (phase 303), for example coming from the simulation module 3.

In summary, the operation of the logic unit U of the system S described above takes place with the following method according to the following steps (reference is always made to figures 3 and 4):
A. receiving 201 said predetermined state parameters of said machine 1 detected by said detecting sensors 12;
B. reading said working program P of said machine 1 from control unit 2;
C. simulating, by means of said simulation module 3, the movement of said machine 1 starting from said working program 3, verifying the absence of any collisions;
D. constructing a predictive model by means of said first supervised neural network 41, starting from the data D relating to said operating parameters of said machine 1;
E. optimizing said working program P by means of said second neural network 42, obtaining an optimized working program;
F. updating said working program P with said optimized working program, thus modifying the instructions I which said control unit 2 transmits to said machine 1; and
G. making said machine 1 executing, by means of said controller 2, said optimized machining program.

In particular, steps C-F can be repeated until an optimized working program is found that does not foresee possible collisions.

### Advantages

An advantage of the system for real-time optimizing the movement of a machine for working panels according to the present invention is that of modifying the working program of the machine in real-time, so as to take into account the current parameters of the machine 1 and of the wear of the various parts thereof.

A further advantage of the system according to the present invention is that of reducing the wear of the mechanical components and the electrical consumption of the machine.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for optimizing the movement of a machine (1) for working wooden panels that is executed by means of a control unit (U), wherein said machine (1) comprises:
working members (11) for carrying out a working program (P) on the basis of instructions (I),
actuating means (11'), connected to said working members (11), for actuating the operation on the basis of said instructions (I),
one or more detecting sensors (12), for detecting data (D) based on predetermined status parameters of said working members (11) and of said actuating means (11') of said machine (1), and
wherein said method comprises the following steps, executed by means of said control unit (U) connected to said actuating means (11') and to said detecting sensors (12) of said machine (1):
A. receiving from said detecting sensors (12) said data (D), so as to detect the state of use of said working members (11);
B. receiving and reading said working program (P) of said machine (1);
C. optimizing said working program (P) according to said data (D), so as to obtain a modified working program, obtaining a sequence of movement instructions (I) of said actuating means (11'), according to the use of said working members (11);
D. updating the instructions (I) of said working program (P) with said modified working program; and
E. having said modified working program carried out by said machine by means of said actuating means (11'),
**characterized in that** said optimization step C is executed on the basis of an objective function or constraints and
**in that** said objective function or said constraints are selected from one or more of the following:
- maximizing the equal distribution of energy consumption between said working members (11);
- minimizing the operations of the working members (11), which have a number of working hours carried out above a percentage threshold of maximum working hours; and/or
- minimizing the dispersion of the operating hours of one or more groups of actuating means (11').

2. Method according to the preceding claim, **characterized in that** said step C comprises the following sub-steps:
C1. executing an algorithm based on a supervised or semi supervised first neural network (41), wherein said first neural network (41) receives in input said data (D) from said detecting sensors (12) and is configured for realizing a predictive model of the behavior of said machine (1) from said data (D); and
C2. executing an algorithm based on an unsupervised second neural network (42), connected so as to receive inlet said predictive model of said first neural network (41) and said data (D).

3. Method according to the preceding claim, **characterized in that** said second neural network (42) is configured for calculating said instructions (I) of said optimized working program on the basis of:
said objective function or said constraints;
said predictive model of said first neural network (41); and
said input data (D) from said one or more detecting sensors (12).

4. Method according to claim 2 or 3, **characterized in that** said first neural network (41) comprises an algorithm of the "clustering" semi supervised type.

5. Method according to any one of the preceding claims, **characterized in that** said second neural network (42) comprises an algorithm of the "Deep Reinforcement Learning" type.

6. Method according to any one of the preceding claims, **characterized**
**in that** said data (D) received in said step A comprise: the energy consumption of each of said working members (11) and of the machine (1) as a whole; the working hours carried out by each of said working members (11); and/or the historical data (D) detected by said sensors means (12); and/or
**in that** said step C comprises the following sub-step:
C3. optimizing said working program (P) according to said data (D) considering: technical constraints to be observed for said actuating members (11') and/or said working members (11); minimum and maximum values of the energy consumption of each of said working members (11) and of the machine (1) as a whole; values of the working hours carried out by each of said working members (11); the maximum number of working hours that can be carried out by each working member (11); and/or the current instructions (I) of said working program (P); and
**in that** during said step D said control unit (U) provides corrective factors for modifying said instructions (I) of said working program (P).

7. Method according to any one of the preceding claims **characterized in that** it comprises, before said step E, the step of simulating said improved working program by means of a simulation module (3) and verifying possible collisions during the execution of said improved working program of said machine (1).

8. Improved working system (S), in particular for working wooden panels, on the basis of a working program (P) comprising instructions (I), wherein said system (S) comprises:
a machine (1) for working wooden panels and the like, comprising working members (11) for carrying out a working program (P), actuating means (11'), connected to said working means (11),
so as to actuate its operation, and
one or more detecting sensors (12), for detecting data (D) based on predetermined status parameters of said working members (11) and/or of said actuating means (11') of said machine (1); and
at least one control unit (U) connected to said actuating means (11') of said machine (1) and to said detecting sensors (12), wherein said at least one control unit (U) comprises a processing module (2) for processing the instructions (I) for the control of the movement of said actuating means (11') of said machine (1), obtained on the basis of said working program (P);
said system (100) being **characterized in that** said at least one control unit (U) further comprises:
an improvement module (4), configured for
receiving inlet said data (D) from said one or more detecting sensors (12),
processing said data by the method according to any one of claims 1-7, so as to obtain a sequence of movement instructions (I) of said actuating means (11'), according to the use of said working members (11),
sending said modified working program to said processing module (2), so as to modify said instructions (I) of said working program (P).

9. System (S) according to claim 8, **characterized in that** said improvement module (4) comprises
a supervised or a semi supervised first neural network (41), which receives inlet said data (D) from said detecting sensors (12), wherein said first neural network (41) is configured for building a predictive model of the behaviour of said machine (1) from said data (D), and
an unsupervised second neural network (42),
connected so as to receive in input said predictive model of said first neural network (41) and said data (D) from said one or more detecting sensors (12) of said machine (1), and
wherein said second neural network (42) is configured to obtain a modified working program from said predictive model for modifying said instructions (I) of said working program (P).

10. System (S) according to any one of claims 8 - 9, **characterized:**
**in that** said data (D) comprise the energy consumption of each of said working members (11) and of the machine (1) as a whole, the working hours carried out by each of said working members (11), and/or the historical data (D) detected by said sensors means (12);
**in that** said improvement module (4) is configured for receiving or determining the maximum number of working hours of each working member (11);
**in that** said improvement module (4) improves said working program (P) according to said data (D) considering: technical constraints to be observed for said actuating means (11') and/or said working members (11); minimum and maximum values of the energy consumption of each of said working members (11) and of the machine (1) as a whole, values of the working hours carried out by each of said working members (11); the maximum number of working hours that can be carried out by each working member; and/or the current instructions (I) of said working program (P); and
**in that** said improvement module (4) is configured for providing corrective factors for modifying said instructions (I) of said working program (P).

11. System (S) according to any one of claims 8-10 **characterized**
**in that** said control unit (U) comprises a simulation module (3), connected to said improvement module (4), wherein said simulation module (3) is configured for receiving said improved working program from said improvement module (4);
simulating said improved working program and
verifying possible collisions during the execution of said improved working program of said machine (1).

## Patentansprüche

1. Verfahren zum Optimieren der Bewegung einer Maschine (1) zum Bearbeiten von Holzplatten, das mittels einer Steuereinheit (U) ausgeführt wird, wobei die Maschine (1) Folgendes umfasst:
Arbeitselemente (11) zum Durchführen eines Arbeitsprogramms (P) basierend auf Anweisungen (I), Betätigungseinrichtungen (11'), die mit den genannten Arbeitselementen (11) verbunden sind, um den Vorgang basierend auf den Anweisungen (I) zu betätigen, einen oder mehrere Erfassungssensoren (12) zum Erfassen von Daten (D) basierend auf vorbestimmten Zustandsparameter der Arbeitselemente (11) und der Betätigungseinrichtungen (11') der Maschine (1), und wobei das Verfahren die folgenden Schritte umfasst, die mittels der Steuereinheit (U) ausgeführt werden, die mit den Betätigungseinrichtungen (11') und den Erfassungssensoren (12) der Maschine (1) verbunden ist:
A. Empfangen der Daten (D) von den Erfassungssensoren (12), um den Benutzungszustand der Arbeitselemente (11) zu erfassen;
B. Empfangen und Lesen des Arbeitsprogramms (P) der Maschine (1);
C. Optimieren des Arbeitsprogramms (P) gemäß den Daten (D), um ein modifiziertes Arbeitsprogramm zu erlangen, Erlangen einer Abfolge von Bewegungsanweisungen (I) der Betätigungseinrichtungen (11') gemäß der Verwendung der Arbeitselemente (11);
D. Aktualisieren der Anweisungen (I) des Arbeitsprogramms (P) mit dem modifizierten Arbeitsprogramm; und
E. Veranlassen, dass das geänderte Arbeitsprogramm mittels der Betätigungseinrichtungen (11') durch die Maschine durchgeführt werden, **dadurch gekennzeichnet, dass** der Optimierungsschritt C basierend auf einer Zielfunktion oder von Nebenbedingungen ausgeführt wird und dadurch, dass die Zielfunktion oder die Nebenbedingungen aus einem oder mehreren von Folgenden ausgewählt sind:
- Maximieren der gleichmäßigen Energieverbrauchsverteilung zwischen den Arbeitselementen (11);
- Minimieren der Vorgänge der Arbeitselemente (11), deren Anzahl der geleisteten Arbeitsstunden über einem prozentualen Schwellenwert der maximalen Arbeitsstunden ist; und/oder
- Minimieren der Streuung der Betriebsstunden einer oder mehrerer Gruppen von Betätigungseinrichtungen (11').

2. Verfahren nach dem vorherigen Anspruch, **dadurch gekennzeichnet, dass** der Schritt C die folgenden Teilschritte umfasst:
C1. Ausführen eines Algorithmus, der auf einem überwachten oder halbüberwachten ersten neuronalen Netz (41) basiert, wobei das erste neuronale Netz (41) als Eingabe die Daten (D) von den Erfassungssensoren (12) empfängt und konfiguriert ist, um ein Vorhersagemodell des Verhaltens der Maschine (1) aus den Daten (D) zu erstellen; und
C2. Ausführen eines Algorithmus basierend auf einem nicht überwachten zweiten neuronalen Netz (42), das verbunden ist, um einen Eingang des Vorhersagemodells des ersten neuronalen Netzes (41) und die Daten (D) zu empfangen.

3. Verfahren nach dem vorherigen Anspruch, **dadurch gekennzeichnet, dass** das zweite neuronale Netz (42) konfiguriert ist, um die Anweisungen (I) des optimierten Arbeitsprogramms basierend auf Folgendem zu berechnen:
der Zielfunktion oder den Nebenbedingungen;
dem Vorhersagemodell des ersten neuronalen Netzes (41);
und den Eingangsdaten (D) von dem einen oder den mehreren Erfassungssensoren (12).

4. Verfahren nach Anspruch 2 oder 3, **dadurch gekennzeichnet, dass** das erste neuronale Netz (41) einen Algorithmus des halbüberwachten "Clustering"-Typs umfasst.

5. Verfahren nach einem der vorherigen Ansprüche, **dadurch gekennzeichnet, dass** das zweite neuronale Netz (42) einen Algorithmus vom Typ "Deep Reinforcement Learning" umfasst.

6. Verfahren nach einem der vorherigen Ansprüche, **dadurch gekennzeichnet dass** die in Schritt A empfangenen Daten (D) Folgendes umfassen: den Energieverbrauch von jedem der Arbeitselemente (11) und der Maschine (1) als Ganzes; die Arbeitsstunden, die von jedem der Arbeitselemente (11) geleistet werden; und/oder die historischen Daten (D), die von den Sensormitteln (12) erfasst werden; und/oder dass der Schritt C den folgenden Teilschritt umfasst:
C3. Optimieren des Arbeitsprogramms (P) gemäß den Daten (D) unter Berücksichtigung von Folgendem: den technischen Beschränkungen, die für die Betätigungselemente (11') und/oder die Arbeitselemente (11) einzuhalten sind; den Mindest- und Höchstwerten des Energieverbrauchs von jedem der Arbeitselemente (11) und der Maschine (1) insgesamt; den Werten der Arbeitsstunden, die von jedem der Arbeitselemente (11) geleistet werden; der maximalen Anzahl von Arbeitsstunden, die von jedem Arbeitselement (11) durchgeführt werden können; und/oder den aktuellen Anweisungen (I) des Arbeitsprogramms (P); und dass während des Schritts D die Steuereinheit (U) Korrekturfaktoren zum Ändern der Anweisungen (I) des Arbeitsprogramms (P) bereitstellt.

7. Verfahren nach einem der vorherigen Ansprüche, **dadurch gekennzeichnet, dass** es vor dem Schritt E den Schritt eines Simulierens des verbesserten Arbeitsprogramms mittels eines Simulationsmoduls (3) und eines Überprüfens möglicher Kollisionen während der Ausführung des verbesserten Arbeitsprogramms der Maschine (1) umfasst.

8. Verbessertes Bearbeitungssystem (S), insbesondere zum Bearbeiten von Holzplatten, basierend auf einem Arbeitsprogramm (P) umfassend Anweisungen (I), wobei das System (S) Folgendes umfasst:
eine Maschine (1) zum Bearbeiten von Holzplatten und dergleichen, umfassend Arbeitselemente (11) zum Ausführen eines Arbeitsprogramms (P), Betätigungseinrichtungen (11'), die mit den Arbeitselementen (11) verbunden sind, um deren Betrieb zu steuern, und einen oder mehrere Erfassungssensoren (12) zum Erfassen von Daten (D) basierend auf vorbestimmten Zustandsparameter der Arbeitselemente (11) und/oder der Betätigungseinrichtungen (11') der Maschine (1), und mindestens eine Steuereinheit (U), die mit den Betätigungseinrichtungen (11') der Maschine (1) und den Erfassungssensoren (12) verbunden ist, wobei die mindestens eine Steuereinheit (U) ein Verarbeitungsmodul (2) zum Verarbeiten der Anweisungen (I) zum Steuern der Bewegung der Betätigungseinrichtungen (11') der Maschine (1) umfasst, die basierend auf des Arbeitsprogramms (P) erlangt werden;
wobei das System (100) **dadurch gekennzeichnet ist, dass** die mindestens eine Steuereinheit (U) ferner Folgendes umfasst:
ein Verbesserungsmodul (4), das zu Folgendem konfiguriert ist Empfangen eines Eingangs der Daten (D) von dem einen oder den mehreren Erfassungssensoren (12), Verarbeiten der Daten durch das Verfahren nach einem der Ansprüche 1-7, um eine Abfolge von Bewegungsanweisungen (I) der Betätigungseinrichtungen (11') entsprechend der Verwendung der Arbeitselemente (11) zu erlangen, Senden des geänderten Arbeitsprogramms an das Verarbeitungsmodul (2), um die Anweisungen (I) des Arbeitsprogramms (P) zu ändern.

9. System (S) nach Anspruch 8, **dadurch gekennzeichnet, dass** das Verbesserungsmodul (4) Folgendes umfasst ein überwachtes oder halbüberwachtes erstes neuronales Netz (41), das einen Eingang der Daten (D) von den Erfassungssensoren (12) empfängt, wobei das erste neuronale Netz (41) konfiguriert ist, um aus den Daten (D) ein Vorhersagemodell des Verhaltens der Maschine (1) zu erstellen, und ein unüberwachtes zweites neuronales Netz (42), das verbunden ist, um als Eingabe das Vorhersagemodell des ersten neuronalen Netzes (41) und die Daten (D) von dem einen oder den mehreren 30 Erfassungssensoren (12) der Maschine (1) zu empfangen, und wobei das zweite neuronale Netzwerk (42) konfiguriert ist, um ein modifiziertes Arbeitsprogramm von dem Vorhersagemodell zu erlangen, um die Anweisungen (I) des Arbeitsprogramms (P) zu ändern.

10. System (S) nach einem der Ansprüche 8 bis 9, **dadurch gekennzeichnet, dass** die Daten (D) den Energieverbrauch von jedem der Arbeitselemente (11) und der Maschine (1) als Ganzes; die Arbeitsstunden, die von jedem der Arbeitselemente (11) geleistet werden; und/oder die historischen Daten (D), die von den Sensormitteln (12) erfasst werden, umfassen;
dass das Verbesserungsmodul (4) konfiguriert ist, um die maximale Anzahl der Arbeitsstunden von Arbeitselement (11) zu empfangen oder zu bestimmen;
dass das Verbesserungsmodul (4) das Arbeitsprogramm (P) gemäß den Daten (D) unter Berücksichtigung von Folgendem verbessert: technischen Beschränkungen, die für die Betätigungselemente (11') und/oder die Arbeitselemente (11) einzuhalten sind; den Mindest- und Höchstwerten des Energieverbrauchs von jedem der Arbeitselemente (11) und der Maschine (1) insgesamt; den Werten der Arbeitsstunden, die von jedem der Arbeitselemente (11) geleistet werden; der maximalen Anzahl von Arbeitsstunden, die von jedem Arbeitselement durchgeführt werden können; und/oder den aktuellen Anweisungen (I) des Arbeitsprogramms (P); und
dass das Verbesserungsmodul (4) konfiguriert ist, um Korrekturfaktoren zum Ändern der Anweisungen (I) des Arbeitsprogramms (P) bereitzustellen.

11. System (S) nach einem der Ansprüche 8-10, **dadurch gekennzeichnet, dass** die Steuereinheit (U) ein Simulationsmodul (3) umfasst, das mit dem Verbesserungsmodul (4) verbunden ist, wobei das Simulationsmodul (3) zu Folgendem konfiguriert ist Empfangen des verbesserten Arbeitsprogramms des Verbesserungsmoduls (4);
Simulieren des verbesserten Arbeitsprogramms und Überprüfen möglicher Kollisionen während der Ausführung des verbesserten Arbeitsprogramms der Maschine (1).

## Revendications

1. Procédé pour optimiser le mouvement d'une machine (1) pour le travail de panneaux en bois qui est exécuté au moyen d'une unité de commande (U), dans lequel ladite machine (1) comprend: des organes de travail (11) pour exécuter un programme de travail (P) sur la base d'instructions (I), des moyens d'actionnement (11'), reliés auxdits éléments de travail (11), pour actionner l'opération sur la base desdites instructions (I), un ou plusieurs capteurs de détection (12), pour détecter des données (D) sur la base de paramètres d'état prédéterminés desdits éléments de travail (11) et desdits moyens d'actionnement (11') de ladite machine (1), et dans lequel ledit procédé comprend les étapes suivantes, exécutées au moyen de ladite unité de commande (U) connectée auxdits moyens d'actionnement (11') et auxdits capteurs de détection (12) de ladite machine (1):
A. recevoir desdits capteurs de détection (12) lesdites données (D), de manière à détecter l'état d'utilisation desdits éléments de travail (11);
B. recevoir et lire ledit programme de travail (P) de ladite machine (1);
C. optimiser ledit programme de travail (P) en fonction desdites données (D), de manière à obtenir un programme de travail modifié, obtenir une séquence d'instructions de mouvement (I) desdits moyens d'actionnement (11'), en fonction de l'utilisation dudit moyen actif (11);
D. mettre à jour les instructions (I) dudit programme de travail (P) avec ledit programme de travail modifié; et
E. faire exécuter ledit programme de travail modifié par ladite machine au moyen desdits moyens d'actionnement (11'), **caractérisé en ce que** ladite étape d'optimisation C est exécutée sur la base d'une fonction objectif ou de contraintes et **en ce que** ladite fonction objectif ou lesdites contraintes sont choisies parmi une ou plusieurs des suivantes:
- maximiser la répartition égale de la consommation d'énergie entre lesdits organes de travail (11);
- minimiser les opérations des moyens de travail (11), qui ont un nombre d'heures de travail effectué supérieur à un seuil de pourcentage d'heures de travail maximales; et/ou
- minimiser la dispersion des heures de fonctionnement d'un ou plusieurs groupes de moyens d'actionnement (11').

2. Procédé selon la revendication précédente, **caractérisé en ce que** ladite étape C comprend les sous-étapes suivantes:
C1. exécuter un algorithme basé sur un premier réseau de neurones supervisé ou semi-supervisé (41), dans lequel ledit premier réseau de neurones (41) reçoit en entrée lesdites données (D) desdits capteurs de détection (12) et est configuré pour réaliser un modèle prédictif du comportement de ladite machine (1) à partir desdites données (D); et
C2. exécuter un algorithme basé sur un deuxième réseau neuronal non supervisé (42), connecté de manière à recevoir en entrée ledit modèle prédictif dudit premier réseau neuronal (41) et lesdites données (D).

3. Procédé selon la revendication précédente, **caractérisé en ce que** ledit second réseau de neurones (42) est configuré pour calculer lesdites instructions (I) dudit programme de travail optimisé sur la base de:
ladite fonction objectif ou lesdites contraintes;
ledit modèle prédictif dudit premier réseau neuronal (41); et lesdites données d'entrée (D) provenant desdits un ou plusieurs capteurs de détection (12).

4. Procédé selon la revendication 2 ou 3, **caractérisé en ce que** ledit premier réseau de neurones (41) comprend un algorithme de type "clustering" semi-supervisé.

5. Procédé selon l'une quelconque des revendications précédentes, **caractérisé en ce que** ledit second réseau de neurones (42) comprend un algorithme de type "Deep Reinforcement Learning".

6. Procédé selon l'une quelconque des revendications précédentes, **caractérisé en ce que** lesdites données (D) reçues à ladite étape A comprennent: la consommation d'énergie de chacun desdits organes de travail (11) et de la machine (1) dans son ensemble; les heures de travail effectuées par chacun desdits moyens de travail (11); et/ou les données historiques (D) détectées par lesdits moyens capteurs (12); et/ou **en ce que** ladite étape C comprend la sous-étape suivante:
C3. optimiser ledit programme de travail (P) en fonction desdites données (D) en considérant: des contraintes techniques à respecter pour lesdits organes d'actionnement (11') et/ou lesdits organes de travail (11); valeurs minimale et maximale de la consommation d'énergie de chacun desdits organes de travail (11) et de la machine (1) dans son ensemble;
valeurs des heures de travail effectuées par chacun desdits moyens de travail (11); le nombre maximum d'heures de travail pouvant être effectuées par chaque moyen de travail (11); et/ou les instructions courantes (I) dudit programme de travail (P); et
**en ce que** lors de ladite étape D ladite unité de commande (U) fournit des facteurs correctifs pour modifier lesdites instructions (I) dudit programme de travail (P).

7. Procédé selon l'une quelconque des revendications précédentes, **caractérisé en ce qu'**il comprend, avant ladite étape E, l'étape de simuler ledit programme de travail amélioré au moyen d'un module de simulation (3) et de vérifier d'éventuelles collisions lors de l'exécution dudit programme de travail amélioré de ladite machine (1).

8. Système de travail (S) amélioré, en particulier pour le travail de panneaux en bois, sur la base d'un programme de travail (P) comprenant des instructions (I), dans lequel ledit système (S) comprend:
une machine (1) pour travailler des panneaux de bois et similaires, comprenant des organes de travail (11) pour exécuter un programme de travail (P), des moyens d'actionnement (11'), reliés auxdits moyens de travail (11), de manière à actionner son fonctionnement, et un ou plusieurs capteurs de détection (12), pour détecter des données (D) sur la base de paramètres d'état prédéterminés desdits éléments de travail (11) et/ou desdits moyens d'actionnement (11') de ladite machine (1), et au moins une unité de commande (U) reliée auxdits moyens d'actionnement (11') de ladite machine (1) et auxdits capteurs de détection (12), dans lequel ladite au moins une unité de commande (U) comprend un module de traitement (2) pour traiter les instructions (I) pour la commande du mouvement desdits moyens d'actionnement (11') de ladite machine (1), obtenues sur la base dudit programme de travail (P);
ledit système (100) étant **caractérisé en ce que** ladite au moins une unité de commande (U) comprend en outre:
un module d'amélioration (4), configuré pour recevoir en entrée lesdites données (D) provenant desdits un ou plusieurs capteurs de détection (12), traiter lesdites données par le procédé selon l'une quelconque des revendications 1 à 7, de manière à obtenir une séquence d'instructions de mouvement (I) desdits moyens d'actionnement (11'), selon l'utilisation desdits organes de travail (11), envoyer ledit programme de travail modifié audit module de traitement (2), de manière à modifier lesdites instructions (I) dudit programme de travail (P).

9. Système (S) selon la revendication 8, **caractérisé en ce que** ledit module d'amélioration (4) comprend un premier réseau de neurones supervisé ou semi-supervisé (41), qui reçoit en entrée lesdites données (D) desdits capteurs de détection (12), dans lequel ledit le premier réseau neuronal (41) est configuré pour construire un modèle prédictif du comportement de ladite machine (1) à partir desdites données (D), et un deuxième réseau neuronal non supervisé (42), connecté de manière à recevoir en entrée ledit modèle prédictif dudit premier réseau neuronal (41) et lesdites données (D) dudit un ou desdits 30 capteurs de détection (12) de ladite machine (1), et dans lequel ledit deuxième réseau neuronal (42) est configuré pour obtenir un programme de travail modifié à partir dudit modèle prédictif pour modifier lesdites instructions (I) dudit programme de travail (P).

10. Système (S) selon l'une quelconque des revendications 8 à 9, **caractérisé:**
**en ce que** lesdites données (D) comprennent: la consommation d'énergie de chacun desdits organes de travail (11) et de la machine (1) dans son ensemble; les heures de travail effectuées par chacun desdits moyens de travail (11), et/ou les données historiques (D) détectées par lesdits moyens capteurs (12);
**en ce que** ledit module d'amélioration (4) est configuré pour recevoir ou déterminer le nombre maximum d'heures de travail de chaque organe de travail (11);
**en ce que** ledit module d'amélioration (4) optimise ledit programme de travail (P) en fonction desdites données (D) en considérant: des contraintes techniques à respecter pour lesdits moyens d'actionnement (11') et/ou lesdits organes de travail (11); valeurs minimale et maximale de la consommation d'énergie de chacun desdits organes de travail (11) et de la machine (1) dans son ensemble; valeurs des heures de travail effectuées par chacun desdits moyens de travail (11); le nombre maximum d'heures de travail pouvant être effectuées par chaque moyen de travail ; et/ou les instructions courantes (I) dudit programme de travail (P); et
**en ce que** ledit module d'amélioration (4) est configuré pour fournir des facteurs correctifs pour modifier lesdites instructions (I) dudit programme de travail (P).

11. Système (S) selon l'une quelconque des revendications 8 à 10, **caractérisé en ce que** ladite unité de commande (U) comprend un module de simulation (3), connecté audit module d'amélioration (4), dans lequel ledit module de simulation (3) est configuré pour
recevoir ledit programme de travail amélioré dudit module d'amélioration (4);
simuler ledit programme de travail amélioré et vérifier d'éventuelles collisions pendant l'exécution dudit programme de travail amélioré de ladite machine (1).
